# FASCICULE DE BREVET EUROPEEN

(11) **EP 2 875 949 B1**
(45) Date de publication et mention de la délivrance du brevet: **04.10.2017**
(21) Numéro de dépôt: 14182747.7
(22) Date de dépôt: 29.08.2014
(51) Int. Cl.: B32B 27/30, B41M 5/00, B41M 7/00, E04F 15/16, B32B 27/08, B32B 27/32, B32B 27/40

(54) **Procédé de réalisation d'un revêtement de sol comprenant un décor imprimé par jet d'encre**
Herstellungsverfahren eines Bodenbelags, der ein mit Tintenstrahlverfahren aufgedrucktes Dekor umfasst
Method for producing a floor covering comprising an ink-jet printed finish

(30) Priorité: 10.09.2013 FR 1358671
(43) Date de publication de la demande: 27.05.2015
(60) Demande divisionnaire: 17182272.9
(73) Titulaire: GERFLOR, 69100 Villeurbanne (FR)
(72) Inventeur: Ceysson, Olivier, 84500 BOLLENE (FR)
(74) Mandataire: Cabinet Laurent & Charras

(56) Documents cités:
- WO-A1-2007/114715
- CN-A- 102 677 867
- GB-A- 2 424 618
- NL-C1- 1 029 194
- US-A1- 2004 086 678

## Description

### DOMAINE TECHNIQUE

La présente invention concerne le secteur technique des revêtements de sols et murs à l'aide de matériaux en polychlorure de vinyle ou similaires et, plus particulièrement, à un procédé de fabrication d'un revêtement de sol comprenant un décor imprimé par jet d'encre.

L'art antérieur le plus proche, US 2004/0086678 A, divulgue un procédé de fabrication d'un revêtement de sols souples selon le préambule de la revendication 1.

### ART ANTERIEUR

Dans le domaine des revêtements de sol, il est bien connu des dalles ou lames composites à base d'au moins une couche de matière plastique, par exemple du polychlorure de vinyle (PVC). De tels revêtements de sol comprennent habituellement en surface au moins une couche d'usure transparente en matière plastique, essentiellement à base de PVC, sous laquelle ou lesquelles est disposée au moins une couche dite de décor en matière plastique, éventuellement moussée, sur laquelle est imprimé un motif ou un décor par héliogravure, avec une couche dite de support consistant généralement dans une nappe non tissée, de fibres de verre par exemple, noyée dans une matière plastique telle que du PVC. Accessoirement, le revêtement de sol peut comporter sous la couche de support une sous-couche résiliente constituée, par exemple, de mousse.

Les motifs ou décors sont ainsi imprimés par un procédé d'héliogravure sur une couche de décor. L'héliogravure est un procédé d'impression en creux par lequel l'encre est transférée directement depuis le cylindre métallique gravé vers la couche de décor, particulièrement adapté aux très longs tirages des revêtements de sol. Les encres utilisées dans ce procédé d'héliogravure sont généralement des encres à l'eau, qui présentent l'avantage de ne pas émettre de composés organiques volatiles (COV) toxiques et néfastes pour l'environnement, de ne pas être inflammable et d'être stable.

Toutefois, pour réaliser des motifs et des décors, il est souvent nécessaire d'utiliser plusieurs cylindres métalliques gravés qui, lorsqu'ils ne sont pas utilisés, doivent être stockés, grevant ainsi les coûts de fabrication. Or, ces cylindres métalliques sont particulièrement encombrants. Par ailleurs, il convient de graver de nouveaux cylindres métalliques pour chaque nouveau motif ou décor, de sorte que la fabrication de nouveaux cylindres métalliques étant onéreuse et souvent longue, le coût de fabrication des revêtements de sol est grevé.

Afin de remédier à ces inconvénients, il peut être envisagé d'imprimer le motif ou le décor par un procédé d'impression à jet d'encre. Ce procédé présente l'avantage de permettre un changement de motif ou de décor rapide et peu onéreux. Les encres pour les procédés d'impression à jet d'encre consistent en des encres pigmentaires liquides, généralement constituées d'un pigment noir ou de couleur en suspension dans un solvant, ledit solvant conférant à la composition d'encre la fluidité ou viscosité nécessaire pour être facilement éjectée de la buse de la tête d'impression et pour éviter, lors des arrêts, que l'encre ne prenne en masse en colmatant la buse.

Le séchage devant être rapide, les solvants utilisés sont généralement très volatiles, ce qui pose des problèmes de pollution de l'environnement.

Bien que l'encre d'impression avec solvant présente une bonne compatibilité chimique avec la couche d'usure et la couche de support des revêtements de sol, l'utilisation d'un procédé d'impression à jet d'encre à partir d'une encre avec solvant n'est pas envisageable en raison des fortes émissions de composés organiques volatiles (COV) toxiques et néfastes pour l'environnement.

Par ailleurs, les encres sans solvant, n'émettant pas de composés organiques volatiles, pour impression par jet d'encre, sont connues. Toutefois, ces encres sans solvant présentent l'inconvénient de ne pas être chimiquement compatibles avec la couche support et la couche d'usure, de sorte qu'une délamination des couches support et d'usure apparaît rapidement.

### EXPOSE DE L'INVENTION

L'un des buts de l'invention est donc de remédier à ces inconvénients en proposant un revêtement de sol, et son procédé de fabrication, de conception simple et peu onéreuse, comportant une couche d'impression décor obtenue par un procédé d'impression à jet d'encre, n'émettant pas de composés organiques volatiles (COV) et ne se délaminant pas au cours du temps.

A cet effet et conformément à l'invention, il est proposé un procédé de fabrication de revêtement de sols souple comprenant une structure multicouche incluant au moins une couche d'usure, une couche d'impression décor et une couche support.

Selon l'invention, ce procédé comporte au moins les étapes suivantes :
- impression de la couche d'impression décor au moyen d'une imprimante à jet d'encre projetant une encre pigmentaire liquide sans solvant :
   ▪ sur la face inférieure de la couche d'usure transparente, ou
   ▪ sur la face supérieure de la couche support,
- apport d'énergie permettant le changement d'état de la couche d'impression décor de l'état liquide à l'état solide;
- dépôt d'une couche de liaison sur la couche d'impression décor ainsi réalisée ou respectivement sur la face supérieure de la couche support dans le cas où l'impression de la couche d'impression décor est intervenue sur la face inférieure de la couche d'usure, ou sur la face inférieure de la couche d'usure dans le cas où l'impression de la couche d'impression décor est intervenue sur la face supérieure de la couche support, ladite couche de liaison étant chimiquement compatible avec l'encre à l'état solide formant la couche d'impression décor et avec la couche support ou la couche d'usure;
- assemblage des sous-ensembles ainsi réalisés entre eux.

On comprend bien que, contrairement aux procédés de l'art antérieur, l'impression par jet d'encre de la couche d'impression décor permet de réduire les coût de fabrication tout en procurant une grande flexibilité pour changer les motifs et les décors des revêtements de sol, et que l'utilisation d'une couche de liaison qui est chimiquement compatible avec l'encre à l'état solide formant la couche d'impression décor et avec la couche support et/ou la couche d'usure permet d'éviter une délamination au cours du temps.

Selon une première variante d'exécution du procédé suivant l'invention, ce dernier comporte les étapes suivantes :
- impression de la couche d'impression décor sur la face supérieure de la couche support, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche d'impression décor à l'état solide,
- assemblage de la couche d'usure avec la couche de liaison.

Selon une seconde variante d'exécution du procédé suivant l'invention, ce dernier comporte au moins les étapes suivantes :
- impression de la couche d'impression décor sur la face inférieure de la couche d'usure, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche d'impression décor à l'état solide,
- assemblage de la couche de liaison sur la couche de support.

Selon une troisième variante d'exécution du procédé suivant l'invention, ce dernier comporte au moins les étapes suivantes :
- impression de la couche d'impression décor sur la face inférieure de la couche d'usure, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche support,
- assemblage de la couche d'impression décor à l'état solide sur la couche de liaison.

Selon une quatrième variante d'exécution du procédé suivant l'invention, ce dernier comporte au moins les étapes suivantes :
- impression de la couche d'impression décor sur la face supérieure de la couche support, au moyen d'une imprimante à jet d'encre projetant une encre pigmentaire liquide sans solvant,
- apport d'énergie permettant le changement d'état de la couche d'impression décor de l'état liquide à l'état solide
- dépôt de la couche de liaison sur la face inférieure de la couche d'usure,
- assemblage de la couche de liaison sur la couche d'impression décor à l'état solide.

La couche de liaison est opaque ou transparente.

Par ailleurs, la couche de liaison est obtenue dans un matériau comprenant une émulsion d'acrylique et d'uréthane et/ou un copolymère acrylique.

De préférence, la couche d'usure est obtenue dans du polychlorure de vinyle (PVC) et/ou du polyuréthane (PU) et/ou une polyoléfine.

De plus, la couche support est obtenue dans une résine thermoplastique choisie parmi le groupe suivant : polychlorure de vinyle (PVC) et/ou polyoléfines.

### DESCRIPTION SOMMAIRE DES FIGURES

D'autres avantages et caractéristiques du revêtement de sol et de son procédé de fabrication conformes à l'invention ressortiront mieux de la description qui va suivre de plusieurs variantes d'exécution, données à titre d'exemples non limitatifs, en référence aux dessins annexés sur lesquels :
- les figures 1A à 1F sont des représentations schématiques en coupe des différentes étapes du procédé de fabrication du revêtement de sol conforme à l'invention,
- les figures 2A à 2E sont des représentations schématiques en coupe des différentes étapes d'une première variante d'exécution du procédé de fabrication du revêtement de sol conforme à l'invention,
- les figures 3A à 3D sont des représentations schématiques en coupe des différentes étapes d'une seconde variante d'exécution du procédé de fabrication du revêtement de sol conforme à l'invention,
- les figures 4A à 4F sont des représentations schématiques en coupe des différentes étapes d'une troisième variante d'exécution du procédé de fabrication du revêtement de sol conforme à l'invention.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas tracées à l'échelle.

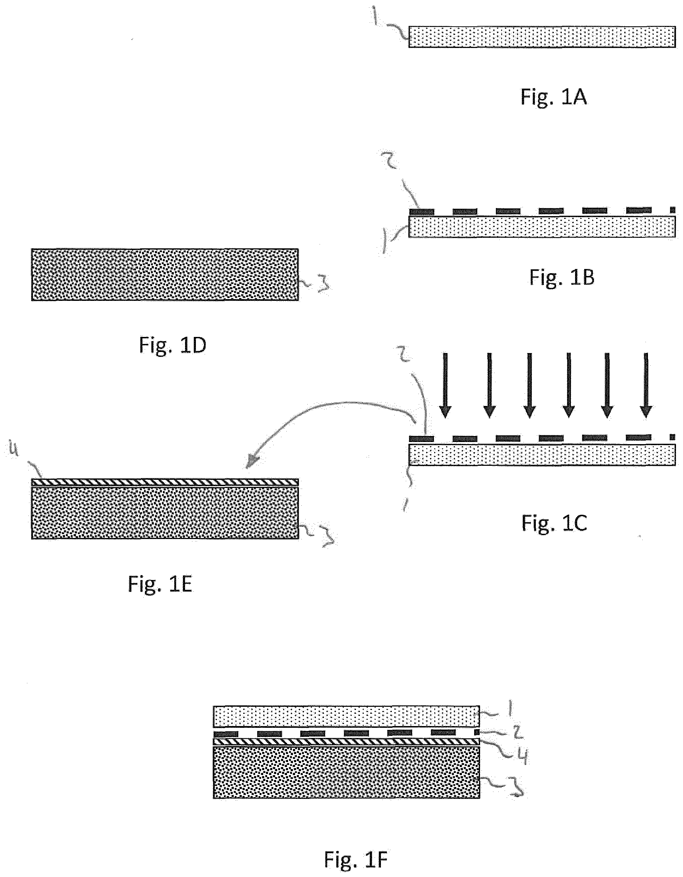

En référence aux figure 1A à 1F, le procédé de fabrication d'un revêtement de sol selon l'invention comporte une première étape (figure 1A) de fabrication d'une couche d'usure (1) transparente, par exemple par calandrage, par extrusion, par dépôt de granulés dits « *dry blends* », par enduction d'un plastisol sur un tapis transporteur ou par tout autre procédé bien connu de l'homme du métier. On entend par « *dry blends* » un mélange pulvérulent de granulés de polychlorure de vinyle (PVC) et de plastifiants, dans lequel le ou les plastifiants ont été absorbés par les granulés de PVC. Cette couche d'usure est essentiellement à base de polychlorure de vinyle (PVC), de préférence très plastifié et sans apport de diluant afin d'éviter l'émission de composés organiques volatiles (COV).

Il va de soi que la couche d'usure (1) pourra comporter une pluralité de couches sans pour autant sortir du cadre de l'invention.

En référence à la figure 1B, une couche d'impression décor (2) est déposée sur la face inférieure de la couche d'usure (1), au moyen d'une imprimante à jet d'encre projetant une encre pigmentaire liquide sans solvant photo-réticulable, ladite couche d'usure (2) étant retournée lors de l'impression de sorte que cette dernière présente sa face inférieure vers le haut. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

En référence à la figure 1C, la couche d'encre ainsi déposée sur la couche d'usure (2) est photo-réticulée pour former la couche d'impression décor (2). La photo-réticulation est procurée par un apport d'énergie sous forme d'un rayonnement ultra-violet (UV) permettant le changement d'état de l'état liquide à l'état solide de couche d'impression décor (2).

Dans le même temps, en référence à la figure 1D, une couche dite de support (3) est fabriquée à partir d'une résine thermoplastique telle que du polychlorure de vinyle (PVC) par tout procédé bien connu de l'homme du métier. On notera que la couche de support (3) pourra comporter une pluralité de couches telle qu'une sous-couche résiliente constituée, par exemple, de mousse.

En référence à la figure 1E, une couche de liaison (4) est déposée sur la face supérieure de la couche support (3).

Ladite couche de liaison (4) est chimiquement compatible avec l'encre photo-réticulée et la couche support. Par ailleurs, ladite couche de liaison (4) est obtenue dans un matériau comprenant une émulsion d'acrylique et d'uréthane et/ou un copolymère acrylique. De plus, ladite couche de liaison peut être soit transparente, soit opaque.

Ensuite, en référence à la figure 1F, la couche d'usure (1) munie de la couche d'impression décor (2) est retournée et mise au contact de la couche de liaison (4) liée à la couche de support (3), de manière à procurer la liaison de la couche d'encre photo-réticulée formant la couche d'impression décor (2) avec la couche support (3). Le revêtement de sol ainsi obtenu est composé d'une couche support inférieure (3), d'une couche de liaison (4) liée à la face supérieure de la couche support (3), d'une couche d'impression décor (2) consistant dans une encre pigmentaire photo-réticulée déposée par une imprimante à jet d'encre sur la face inférieure d'une couche d'usure (1) et liée à la face supérieure de la couche de liaison (4).

On notera que l'impression par jet d'encre de la couche d'impression décor permet de réduire les coût de fabrication tout en procurant une grande flexibilité pour changer les motifs et les décors des revêtements de sol et que l'utilisation d'une couche de liaison (4), chimiquement compatible avec l'encre photo-réticulée formant la couche d'impression décor (2) et avec la couche support (3) et/ou la couche d'usure (1), permet d'éviter une délamination au cours du temps.

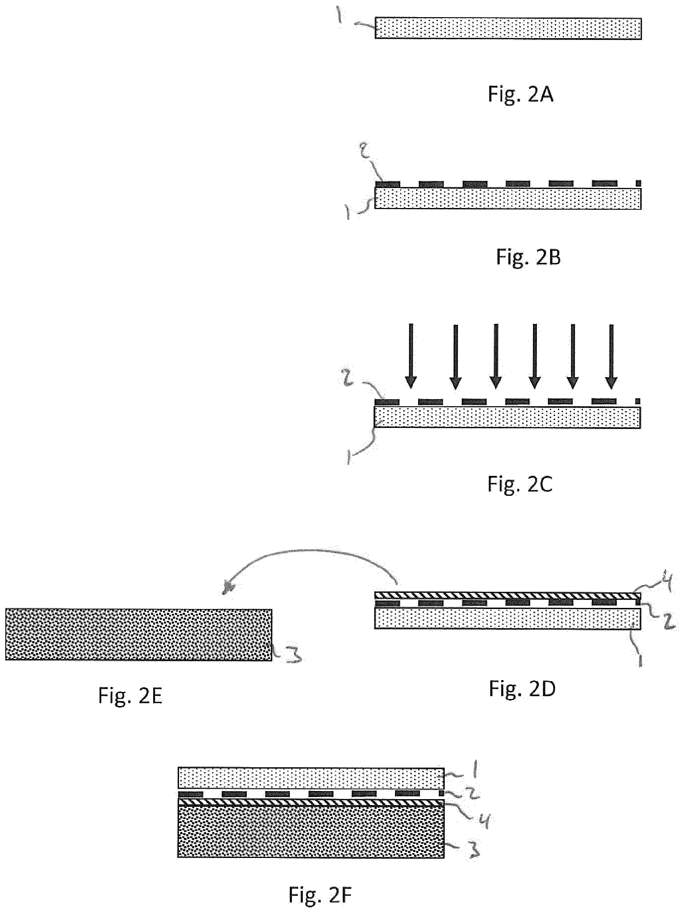

Selon une seconde variante d'exécution du procédé selon l'invention, en référence aux figure 2A à 2E, le procédé de fabrication d'un revêtement de sol comporte une première étape (figure 2A) de fabrication d'une couche d'usure (1) transparente, par exemple par calandrage, par extrusion, par dépôt de granulés dits *« dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant, et pourra éventuellement comporter une pluralité de couches.

En référence à la figure 2B, une couche d'impression décor (2) est déposée sur la face inférieure de la couche d'usure (1), au moyen d'une imprimante à jet d'encre projetant une encre pigmentaire liquide sans solvant photo-réticulable, ladite couche d'usure (2) étant retournée lors de l'impression de sorte que cette dernière présente sa face inférieure vers le haut. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

En référence à la figure 2C, la couche d'encre ainsi déposée sur la couche d'usure (2) est photo-réticulée pour former la couche d'impression décor (2). La photo-réticulation est procurée par un apport d'énergie sous forme d'un rayonnement ultra-violet (UV) permettant le changement d'état de l'état liquide à l'état solide de couche d'impression décor (2).

En référence à la figure 2D, une couche de liaison (4) est déposée sur la face inférieure de la couche d'impression décor (2). Ladite couche de liaison (4) est chimiquement compatible avec l'encre photo-réticulée et la couche support. Par ailleurs, ladite couche de liaison (4) est obtenue dans un matériau comprenant une émulsion d'acrylique et d'uréthane et/ou un copolymère acrylique. De plus, ladite couche de liaison peut être soit transparente soit opaque.

Dans le même temps, en référence à la figure 2E, une couche dite de support (3) est fabriquée à partir d'une résine thermoplastique, telle que du polychlorure de vinyle (PVC) par tout procédé bien connu de l'homme du métier. On notera que la couche support (3) peut comporter une pluralité de couches, telle qu'une sous-couche résiliente constituée, par exemple, de mousse.

Ensuite, en référence à la figure 2F, la couche d'usure (1) munie de la couche d'impression décor (2) et de la couche de liaison (4) est retournée et mise au contact de la couche support (3), de manière à procurer la liaison de la couche de liaison (4) avec la couche support (3). Le revêtement de sol ainsi obtenu est composé d'une couche support inférieure (3), d'une couche de liaison (4) liée à la face supérieure de la couche support (3), d'une couche d'impression décor (2) consistant dans une encre pigmentaire photo-réticulée déposée par une imprimante à jet d'encre sur la face inférieure d'une couche d'usure (1) et liée à la face supérieure de la couche de liaison (4).

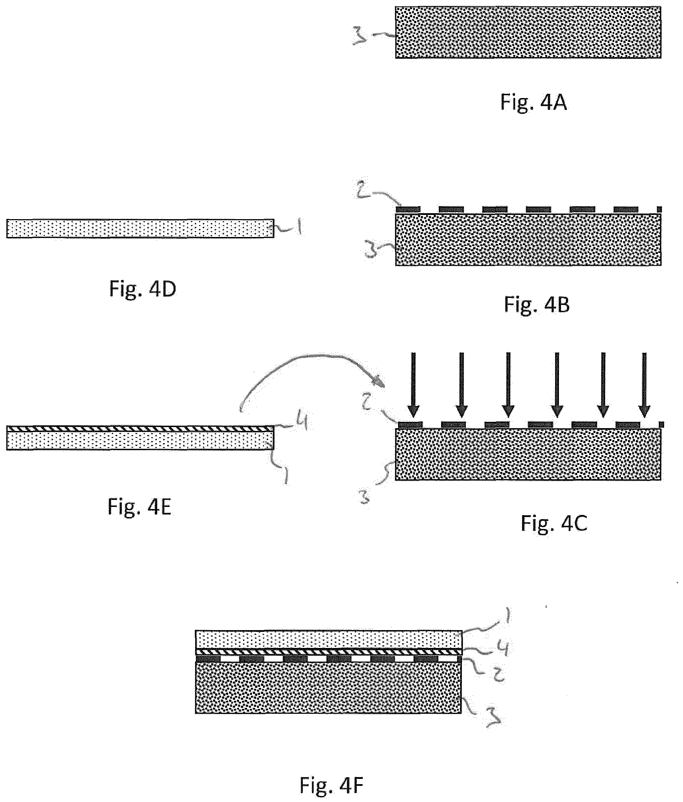

Selon une troisième variante d'exécution du procédé selon l'invention, en référence aux figures 4A à 4D, ce dernier comporte une première étape de fabrication d'une couche dite de support (3) à partir d'une résine thermoplastique telle que du polychlorure de vinyle (PVC) par tout procédé bien connu de l'homme du métier, tel que par un procédé de calandrage, d'extrusion, de pressage ou d'enduction par exemple. On notera que la couche support (3) peut comporter une pluralité de couches, telle qu'une sous-couche résiliente constituée, par exemple, de mousse.

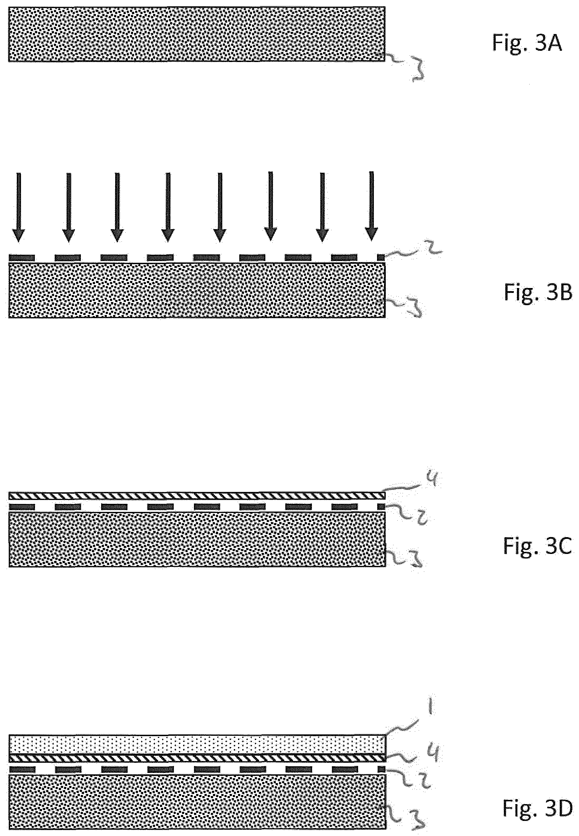

En référence à la figure 3B, une couche d'impression décor (2) est déposée sur la face supérieure de la couche support (3), au moyen d'une imprimante à jet d'encre projetant une encre pigmentaire liquide sans solvant photo-réticulable.

Puis la couche d'encre ainsi déposée sur la couche support (3) est photo-réticulée pour former la couche d'impression décor (2) sèche.

L'encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

Ensuite, en référence à la figure 3C, une couche de liaison (4) transparente est déposée sur la face supérieure de la couche d'impression décor (2). Ladite couche de liaison (4) est chimiquement compatible avec l'encre photo-réticulée et la couche support (3), et est obtenue dans un matériau comprenant une émulsion d'acrylique et d'uréthane et/ou un copolymère acrylique.

Finalement, en référence à la figure 3D, une couche d'usure (1) transparente est déposée sur la face supérieure de la couche de liaison (4), par exemple par calandrage, par extrusion, par dépôt de granulés dits « *dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant notamment.

Le revêtement de sol ainsi obtenu est composé d'une couche support (3) inférieure, d'une couche d'impression décor (2) consistant dans une encre pigmentaire photo-réticulée déposée par une imprimante à jet d'encre sur la face supérieure de la couche support (3), une couche de liaison (4) liée à la face supérieure de la couche d'impression décor (2) et une couche d'usure (1) liée à la face supérieure de la couche de liaison (4).

Selon une quatrième variante d'exécution du procédé selon l'invention, en référence aux figures 4A à 4F, ce dernier comporte une première étape (figure 4A) de fabrication d'une couche dite de support (3) à partir d'une résine thermoplastique, telle que du polychlorure de vinyle (PVC) par tout procédé bien connu de l'homme du métier tel que par un procédé de calandrage, d'extrusion, de pressage ou d'enduction par exemple. On notera que la couche support (3) peut comporter une pluralité de couches telle qu'une sous-couche résiliente constituée, par exemple, de mousse.

En référence à la figure 4B, une couche d'impression décor (2) est déposée sur la face supérieure de la couche support (3), au moyen d'une imprimante à jet d'encre projetant une encre pigmentaire liquide sans solvant photo-réticulable, puis, en référence à la figure 4C, la couche d'encre ainsi déposée sur la couche de support (3) est photo-réticulée pour former la couche d'impression décor (2) sèche. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

Dans le même temps, en référence à la figure 4D, une couche d'usure (1) transparente est fabriquée par exemple par calandrage, par extrusion, par dépôt de granulés dits « *dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant, et peut éventuellement comporter une pluralité de couches.

Puis, en référence à la figure 4E, une couche de liaison (4) transparente est déposée sur la face inférieure de la couche d'usure (1), ladite couche de liaison (4) étant chimiquement compatible avec la couche d'usure (1) et obtenue dans un matériau comprenant une émulsion d'acrylique et d'uréthane et/ou un copolymère acrylique. On notera que ladite couche d'usure (1) est retournée lors du dépôt de la couche de liaison (4), de sorte que cette dernière présente sa face inférieure vers le haut.

Ensuite, en référence à la figure 4F, l'ensemble constitué par la couche d'usure (1) et la couche de liaison (4) est retourné et mis au contact avec la couche d'impression décor (2), de manière à procurer la liaison de la couche d'encre photo-réticulée formant la couche d'impression décor (2) avec la couche de liaison (4).

Le revêtement de sol ainsi obtenu est composé d'une couche support (3) inférieure, d'une couche d'impression décor (2) consistant dans une encre pigmentaire photo-réticulée déposée par une imprimante à jet d'encre sur la face supérieure de la couche support (3), d'une couche de liaison (4) liée à la face supérieure de la couche d'impression décor (2) et d'une couche d'usure (1) liée à la face supérieure de la couche de liaison (4).

Par ailleurs, selon une autre variante d'exécution, l'encre pigmentaire liquide sans solvant photo-réticulable est substituée par une encre dite latex sans solvant, le changement d'état de ladite encre de l'état liquide à l'état solide étant alors réalisé par un apport d'énergie sous forme de chaleur. Une telle encre latex comporte notamment, par exemple, une résine du type pyrrolidone, une résine de copolymère styrène-acrylique et de l'eau. Une telle encre latex est notamment commercialisée sous la référence HP L25500 par la société Hewlet Packard.

Selon une dernière variante d'exécution, l'encre pigmentaire liquide sans solvant photo-réticulable est substituée par une encre dite EB, selon l'acronyme anglo-saxon « *Electronic Beam* », le changement d'état de ladite encre de l'état liquide à l'état solide étant alors réalisé par un apport d'énergie sous la forme d'un faisceau d'électrons. Une telle encre EB comprend de manière bien connue en soi des prépolymères, des monomères et éventuellement un ou plusieurs photo-amorceurs cationiques et/ou radicalaires.

Enfin, il est bien évident que les exemples précités ne sont que des illustrations particulières en aucun cas limitatives quant aux domaines d'application de l'invention.

## Revendications

1. - Procédé de fabrication de revêtement de sols souple comprenant une structure multicouche incluant au moins une couche d'usure (1), une couche d'impression décor (2) et une couche support (3), comportant au moins les étapes suivantes:
- impression de la couche d'impression décor (2) au moyen d'une imprimante à jet d'encre projetant une encre pigmentaire liquide sans solvant :
▪ sur la face inférieure de la couche d'usure (1) transparente, ou
▪ sur la face supérieure de la couche support (3),
- apport d'énergie permettant le changement d'état de la couche d'impression décor (2) de l'état liquide à l'état solide;
**caractérisé par**
- dépôt d'une couche de liaison (4) sur la couche d'impression décor (2) ainsi réalisée ou respectivement sur la face supérieure de la couche support (3) dans le cas où l'impression de la couche d'impression décor (2) est intervenue sur la face inférieure de la couche d'usure, ou sur la face inférieure de la couche d'usure (1) dans le cas où l'impression de la couche d'impression décor (2) est intervenue sur la face supérieure de la couche support (3), ladite couche de liaison (4) étant chimiquement compatible avec l'encre à l'état solide formant la couche d'impression décor (2) et avec la couche support (3) ou la couche d'usure (1);
- assemblage des sous-ensembles ainsi réalisés entre eux.

2. - Procédé selon la revendication 1, ***caractérisé* en ce qu'**il comporte les étapes suivantes :
- impression de la couche d'impression décor (2) sur la face supérieure de la couche support (3) au moyen d'une imprimante à jet d'encre projetant une encre pigmentaire liquide sans solvant,
- apport d'énergie permettant le changement d'état de la couche d'impression décor (2) de l'état liquide à l'état solide,
- dépôt de la couche de liaison (4) sur la couche d'impression décor (2) à l'état solide,
- assemblage de la couche d'usure (1) avec la couche de liaison (4).

3. - Procédé selon la revendication 1 ***caractérisé* en ce qu'**il comporte les étapes suivantes :
- impression de la couche d'impression décor (2) sur la face inférieure de la couche d'usure (1), au moyen d'une imprimante à jet d'encre projetant une encre pigmentaire liquide sans solvant,
- apport d'énergie permettant le changement d'état de la couche d'impression décor (2) de l'état liquide à l'état solide,
- dépôt de la couche de liaison (4) sur la couche d'impression décor (2) à l'état solide,
- assemblage du sous-ensemble ainsi réalisé sur la couche support (3).

4. - Procédé selon la revendication 1 ***caractérisé* en ce qu'**il comporte les étapes suivantes :
- impression de la couche d'impression décor (2) sur la face inférieure de la couche d'usure (1), au moyen d'une imprimante à jet d'encre projetant une encre pigmentaire liquide sans solvant,
- apport d'énergie permettant le changement d'état de la couche d'impression décor (2) de l'état liquide à l'état solide,
- dépôt de la couche de liaison (4) sur la couche support (3),
- assemblage du sous-ensemble constitué par la couche d'usure munie de la couche d'impression décor (2) à l'état solide sur le sous-ensemble constitué par la couche support (3) revêtue de la couche de liaison (4).

5. - Procédé selon la revendication 1 ***caractérisé* en ce qu'**il comporte au moins les étapes suivantes :
- impression de la couche d'impression décor (2) sur la face supérieure de la couche support (3) au moyen d'une imprimante à jet d'encre projetant une encre pigmentaire liquide sans solvant,
- apport d'énergie permettant le changement d'état de la couche d'impression décor (2) de l'état liquide à l'état solide
- dépôt de la couche de liaison (4) sur la face inférieure de la couche d'usure (1),
- assemblage du sous-ensemble constitué par la couche support (3), la couche d'impression décor (2) avec le sous-ensemble constitué par la couche d'usure (1) revêtue de la couche de liaison (4).

6. - Procédé selon l'une quelconque des revendications 2 ou 5 ***caractérisé* en ce que** la couche de liaison (4) est transparente.

7. - Procédé selon l'une quelconque des revendications 1 à 6 ***caractérisé* en ce que** la couche de liaison (4) est obtenue dans un matériau comprenant une émulsion acrylique et d'uréthane et/ou un copolymère acrylique.

8. - Procédé selon l'une quelconque des revendications 1 à 7 ***caractérisé* en ce que** la couche d'usure (1) est obtenue dans du polychlorure de vinyle (PVC) et/ou du polyuréthane (PU) et/ou une polyoléfine.

9. - Procédé selon l'une quelconque des revendications 1 à 8 ***caractérisé* en ce que** la couche support (3) est obtenue dans une résine thermoplastique choisie dans le groupe comprenant le: polychlorure de vinyle (PVC) et les polyoléfines.

## Patentansprüche

1. Verfahren zur Herstellung eines weichen Bodenbelags, der eine vielschichtige Struktur mit mindestens einer Verschleißschicht (1), einer Dekordruckschicht (2) und einer Trägerschicht (3) besitzt, wobei das Verfahren mindestens folgende Verfahrensschritte umfasst:
- Aufdruck der Dekordruckschicht (2) mittels eines Tintenstrahldruckers, der eine flüssige, lösungsmittelfreie Pigmenttinte aufspritzt:
▪ auf die Unterseite der durchsichtigen Verschleißschicht (1) oder
▪ auf die Oberseite der Trägerschicht (3),
- Energiezufuhr zum Zustandswechsel der Dekordruckschicht (2) vom flüssigen Zustand in den festen Zustand;
**gekennzeichnet durch**
- Aufbringen einer Verbundschicht (4) auf die so gefertigte Dekordruckschicht (2) entweder auf die Oberseite der Trägerschicht (3), wenn der Aufdruck der Dekordruckschicht (2) auf der Unterseite der Verschleißschicht erfolgte, oder auf die Unterseite der Verschleißschicht (1), wenn der Aufdruck der Dekordruckschicht (2) auf der Oberseite der Trägerschicht (3) erfolgte, wobei die Verbundschicht (4) mit der die Dekordruckschicht (2) bildenden Tinte im festen Zustand und mit der Trägerschicht (3) oder der Verschleißschicht (1) chemisch kompatibel ist;
- Zusammenfügen der so gefertigten Teilbaugruppen.

2. Verfahren nach Anspruch 1, **dadurch gekennzeichnet, dass** das Verfahren folgende Verfahrensschritte umfasst:
- Aufdruck der Dekordruckschicht (2) auf die Oberseite der Trägerschicht (3) mittels eines Tintenstrahldruckers, der eine flüssige, lösungsmittelfreie Pigmenttinte aufspritzt,
- Energiezufuhr zum Zustandswechsel der Dekordruckschicht (2) vom flüssigen Zustand in den festen Zustand,
- Aufbringen der Verbundschicht (4) auf die Dekordruckschicht (2) in festem Zustand,
- Zusammenfügen von Verschleißschicht (1) und Verbundschicht (4).

3. Verfahren nach Anspruch 1, **dadurch gekennzeichnet, dass** das Verfahren folgende Verfahrensschritte umfasst:
- Aufdruck der Dekordruckschicht (2) auf die Unterseite der Verschleißschicht (1) mittels eines Tintenstrahldruckers, der eine flüssige, lösungsmittelfreie Pigmenttinte aufspritzt,
- Energiezufuhr zum Zustandswechsel der Dekordruckschicht (2) vom flüssigen Zustand in den festen Zustand,
- Aufbringen der Verbundschicht (4) auf die Dekordruckschicht (2) in festem Zustand,
- Zusammenfügen der so gefertigten Teilbaugruppe und der Trägerschicht (3).

4. Verfahren nach Anspruch 1, **dadurch gekennzeichnet, dass** das Verfahren folgende Verfahrensschritte umfasst:
- Aufdruck der Dekordruckschicht (2) auf die Unterseite der Verschleißschicht (1) mittels eines Tintenstrahldruckers, der eine flüssige, lösungsmittelfreie Pigmenttinte aufspritzt,
- Energiezufuhr zum Zustandswechsel der Dekordruckschicht (2) vom flüssigen Zustand in den festen Zustand,
- Aufbringen der Verbundschicht (4) auf die Trägerschicht (3),
- Zusammenfügen der Teilbaugruppe, die aus der Verschleißschicht zusammen mit der Dekordruckschicht (2) in festem Zustand besteht, und der Teilbaugruppe, die aus der mit der Verbundschicht (4) versehenen Trägerschicht (3) besteht.

5. Verfahren nach Anspruch 1, **dadurch gekennzeichnet, dass** das Verfahren mindestens folgende Verfahrensschritte umfasst:
- Aufdruck der Dekordruckschicht (2) auf die Oberseite der Trägerschicht (3) mittels eines Tintenstrahldruckers, der eine flüssige, lösungsmittelfreie Pigmenttinte aufspritzt,
- Energiezufuhr zum Zustandswechsel der Dekordruckschicht (2) vom flüssigen Zustand in den festen Zustand,
- Aufbringen der Verbundschicht (4) auf die Unterseite der Verschleißschicht (1),
- Zusammenfügen der Teilbaugruppe, die aus der Trägerschicht (3) und der Dekordruckschicht (2) besteht, und der Teilbaugruppe, die aus der mit der Verbundschicht (4) versehenen Verschleißschicht (1) besteht.

6. Verfahren nach einem der Ansprüche 2 oder 5, **dadurch gekennzeichnet, dass** die Verbundschicht (4) durchsichtig ist.

7. Verfahren nach einem der Ansprüche 1 bis 6, **dadurch gekennzeichnet, dass** die Verbundschicht (4) aus einem Material gefertigt wird, das aus einer Acryl-/Urethanemulsion und/oder einem Acrylcopolymer besteht.

8. Verfahren nach einem der Ansprüche 1 bis 7, **dadurch gekennzeichnet, dass** die Verschleißschicht (1) aus Polyvinylchlorid (PVC) und/oder aus Polyurethan (PU) und/oder aus Polyolefin gefertigt wird.

9. Verfahren nach einem der Ansprüche 1 bis 8, **dadurch gekennzeichnet, dass** die Trägerschicht (3) aus einem thermoplastischen Kunststoff gefertigt wird, der aus der Gruppe ausgewählt wurde, zu der Polyvinylchlorid (PVC) und Polyolefine gehören.

## Claims

1. A method for manufacturing a flexible floor covering comprising a multilayer structure including at least one wear layer (1), a decorative printing layer (2) and a support layer (3), comprising at least the following steps:
- print the decorative printing layer (2) by means of an ink jet printer projecting a solvent-free liquid pigment ink:
▪ on the underside of the transparent wear layer (1), or
▪ on the upper side of the support layer (3),
- supply energy enabling to change the state of the decorative printing layer (2) from the liquid state to the solid state;
**characterized by**
- deposit of a bonding layer (4) on the decorative printing layer (2) thus produced or respectively on the upper side of the support layer (3) in the case in which the printing of the decorative printing layer (2) has been implemented on the underside of the wear layer or on the underside of the wear layer (1) in the case in which the printing of the decorative printing layer (2) has been implemented on the upper side of the support layer (3), said bonding layer (4) being chemically compatible with the solid state ink forming the decorative printing layer (2) and with the support layer (3) or the wear layer (1);
- assembly of the sub-assemblies thus produced between them.

2. The method according to claim 1, **characterized in that** it comprises the following steps:
- printing the decorative printing layer (2) on the upper side of the support layer (3) by means of an ink jet printer projecting a solvent-free liquid pigment ink,
- supplying energy enabling to change the state of the decorative printing layer (2) from the liquid state to the solid state,
- deposit of the bonding layer (4) on the decorative printing layer (2) at the solid state,
- assembly of the wear layer (1) with the bonding layer (4).

3. The method according to claim 1, **characterized in that** it comprises the following steps:
- printing the decorative printing layer (2) on the underside of the wear layer (1) by means of an ink jet printer projecting a solvent-free liquid pigment ink,
- supplying energy enabling the state of the decorative printing layer (2) to change state from the liquid state to the solid state;
- deposit of the bonding layer (4) on the decorative printing layer (2) in the solid state,
- assembly of the sub-assembly thus produced on the bonding layer (4).

4. The method according to claim 1, **characterized in that** it comprises the following steps:
- printing the decorative printing layer (2) on the underside of the wear layer (1) by means of an ink jet printer projecting a solvent-free liquid pigment ink,
- supplying energy enabling the state of the decorative printing layer (2) to change state from the liquid state to the solid state,
- deposit of the bonding layer (4) on the support layer (3),
- assembly of the subassembly constituted by the wear layer provided with the decorative printing layer (2) at the solid state on the subassembly constituted by the support layer (3) coated with the bonding layer (4).

5. The method according to claim 1, **characterized in that** it comprises at least the following steps:
- printing the decorative printing layer (2) on the upper side of the support layer (3) by means of an ink jet printer projecting a solvent-free liquid pigment ink,
- supplying energy enabling to change the state of the decorative printing layer (2) from the liquid state to the solid state,
- deposit of the bonding layer (4) on the decorative printing layer (2) in the solid state,
- assembly of the subassembly constituted by the support layer (3) and the decorative printing layer (2) with the subassembly constituted by the wear layer (1) coated with the bonding layer (4).

6. The method according to claim 2 or 5, **characterized in that** the bonding layer (4) is transparent.

7. The method according to anyone of claims 1 to 6, **characterized in that** the bonding layer (4) is made from a material comprising an acrylic and urethane emulsion and/or an acrylic copolymer.

8. The method according to anyone of claims 1 to 7, **characterized in that** the wear layer (1) is made from polyvinyl chloride (PVC) and/or a polyurethane and/or a polyolefin.

9. The method according to anyone of claims 1 to 8, **characterized in that** the support layer (3) is made from a thermoplastic resin selected from the group comprising polyvinyl chloride (PVC) and polyolefins.
